# EUROPÄISCHE PATENTSCHRIFT

(11) **EP 3 545 114 B1**
(45) Veröffentlichungstag und Bekanntmachung des Hinweises auf die Patenterteilung: **09.12.2020**
(21) Anmeldenummer: 18721956.3
(22) Anmeldetag: 28.03.2018
(51) Int. Cl.: C22B 7/00, G21C 19/42, G21F 9/00

(54) **VERFAHREN ZUR RÜCKGEWINNUNG VON URAN VON MIT URANOXID KONTAMINIERTEN BAUTEILEN**
METHOD FOR RECOVERING URANIUM FROM COMPONENTS CONTAMINATED WITH URANIUM OXIDE
PROCÉDÉ POUR LA RÉCUPÉRATION D'URANIUM À PARTIR DE PIÈCES CONTAMINÉES PAR DE L'OXYDE D'URANIUM

(30) Priorität: 31.03.2017 DE 102017107037
(43) Veröffentlichungstag der Anmeldung: 02.10.2019
(73) Patentinhaber: Framatome GmbH, 91052 Erlangen (DE)
(72) Erfinder: ROPPELT, Alfons, 91301 Forchheim (DE); HOPPE, Sebastian, 91353 Hausen (DE); SCHMID, Wolfgang, 90571 Schwaig (DE); BEZOLD, Rainer, 91077 Dormitz (DE); EISSNER, Jürgen, 91550 Dinkelsbühl (DE); BERGMANN, Norbert, 91054 Erlangen (DE)
(74) Vertreter: Lavoix
(86) Internationale Anmeldenummer: PCT/EP2018/057999
(87) Internationale Veröffentlichungsnummer: WO 2018/178192

(56) Entgegenhaltungen:
- JP-A- H10 132 999
- US-A- 4 657 596
- RUDISILL ET AL: "Decontamination of Zircaloy cladding hulls from spent nuclear fuel", JOURNAL OF NUCLEAR MATERIALS, ELSEVIER B.V, NETHERLANDS, Bd. 385, Nr. 1, 15. März 2009 (2009-03-15) , Seiten 193-195, XP025996484, ISSN: 0022-3115, DOI: 10.1016/J.JNUCMAT.2008.10.016 [gefunden am 2008-11-07]

## Beschreibung

Die Erfindung betrifft ein Verfahren zur Rückgewinnung von Uran, insbesondere Uran in Form von Uransalzen oder Uranoxid, von mit Uranoxid kontaminierten Bauteilen, beispielsweise entleerten Hüllrohren oder Brennstabhüllrohren.

US 4 657 596 A beschreibt ein Verfahren zur Dekontamination der Metalloberflächen im Kühlsystem eines Kernreaktors.

JP H10 132999 beschreibt ein Verfahren zum Entfernen von Uran.

Um urankontaminierte Bauteile, wie beispielsweise entleerte Hüllrohre bzw. Brennstabhüllrohre, beim nuklearen Rückbau bzw. bei der Abfallkonditionierung uneingeschränkt radiologisch freizugeben, müssen diese Bauteile eine Reinigung durchlaufen.

Es ist daher Aufgabe der Erfindung ein neues Verfahren anzugeben, insbesondere ein neues Verfahren durch welches Uranoxid von mit Uranoxid kontaminierten Bauteilen abgelöst werden kann und anschließend zurückgewonnen werden kann.

Diese Aufgabe wird gelöst durch ein Verfahren mit den Merkmalen nach Anspruch 1. Vorteilhafte Ausgestaltungen und Weiterbildungen sind in den jeweils abhängigen Ansprüchen angegeben.

Die Vorteile der Erfindung liegen insbesondere darin, dass eine Weiterverwendung der Bauteile möglich ist und eine kostspielige Entsorgung entfällt.

Gemäß einer besonders bevorzugten Weiterbildung der Erfindung ist vorgesehen, dass die Reinigungseinrichtung ein Säurebad ist oder umfasst und dass die Reinigungslösung eine Säure umfasst, wobei die Säure vorzugsweise Salpetersäure ist, wobei die Salpetersäure beispielsweise eine Konzentration von 1% bis 70%, bevorzugt 2% bis 60%, aufweist.

Bevorzugt wird zur Durchführung von Messungen des Urangehalts eine Messeinrichtung bereitgestellt, wobei die Messeinrichtung eine Messkabine umfasst, wobei die Messkabine einen oder mehrere Gammadetektoren und/oder eine zentrale Messsonde zur Messung des Urangehalts aufweist, wobei die Gammadetektoren vorzugsweise in den Seitenbereichen und/oder an den Seitenwänden der Messkabine angeordnet sind. Unter Seitenwänden können auch der Boden und die Decke der Messkabine verstanden werden.

Es kann vorgesehen sein, dass bevor eine Charge an Bauteilen in die Reinigungseinrichtung eingebracht wird, die Charge an Bauteilen zur Durchführung einer ersten Messung des Urangehalts der Messeinrichtung zugeführt wird, wobei die erste Messung vorzugsweise über einen vorgesehenen Zeitraum erfolgt, beispielsweise 1 Minute bis 48 Stunden, bevorzugt 5 Minuten bis 24 Stunden.

Ferner kann vorgesehen sein, dass die Bauteile einer Charge an Bauteilen während der ersten Messung in einem Transport- und/oder Lagerbehälter, beispielsweise einem Fass, gelagert sind, wobei der Transport- und/oder Lagerbehälter zur Durchführung der ersten Messung vorzugsweise vollständig in die Messkabine eingebracht wird.

Gemäß einer Ausführungsvariante der Erfindung wird die Zentralsonde zur Durchführung der ersten Messung mittig in den Transport- und/oder Lagerbehälter eingeführt, vorzugsweise bevor der Transport- und/oder Lagerbehälter in die Messkabine eingebracht wird.

Bevorzugt wird die Reinigungslösung während des Reinigungsprozesses, vorzugsweise elektrisch, beheizt, beispielsweise auf Temperaturen zwischen 20° C und 110° C, bevorzugt auf Temperaturen zwischen 30° C und 100° C. Zum Beheizen dient vorzugsweise eine Heizung, welche beispielsweise an oder in den Seitenwänden der Reinigungseinrichtung vorgesehen ist.

Ferner kann vorgesehen sein, dass die Reinigungslösung während des Reinigungsprozesses durch Ultraschall angeregt wird. Der Ultraschall wird vorzugsweise durch einen Ultraschallgenerator erzeugt, welcher beispielsweise am oder unter dem Boden der Reinigungseinrichtung vorgesehen ist.

Die Erfindung sieht vor, dass die Reinigungslösung während des Reinigungsprozesses nach Schritt b1) einer Konvektionsströmung ausgesetzt wird, so dass die Reinigungslösung die Bauteile einer Charge an Bauteilen umströmt und/oder durchströmt.

Eine Ausführungsvariante der Erfindung sieht vor, dass die Bauteile einer Charge an Bauteilen nach dem Reinigungsprozess nach Schritt b1) aus der Reinigungseinrichtung, beispielsweise mittels eines Krans, ausgeführt werden, und einem Deionatbad zugeführt werden, wobei die Bauteile einer Charge an Bauteilen für einen vorgesehenen Zeitraum, beispielsweise 1 Minute bis 48 Stunden, bevorzugt 5 Minuten bis 24 Stunden, in dem Deionatbad verbleiben.

Es kann vorgesehen sein, dass die Bauteile einer Charge an Bauteilen nach dem Deionatbad, beispielsweise mittels eines Krans aus dem Deionatbad ausgeführt und einer Abtropfwanne zugeführt werden, wobei die Bauteile einer Charge an Bauteilen zur Trocknung in der Abtropfwanne für einen vorgesehenen Zeitraum, beispielsweise 1 Minute bis 48 Stunden, bevorzugt 5 Minuten bis 24 Stunden, verbleiben.

Gemäß der Erfindung werden die Bauteile einer Charge an Bauteilen während des Reinigungsprozesses nach Schritt b1) in einem Transportkorb, beispielsweise einem Transportkorb aus Edelstahl, gelagert.

Vorzugsweise werden die Bauteile einer Charge an Bauteilen vor dem Einbringen in die Reinigungseinrichtung von dem Transport- und/oder Lagerbehälter, beispielsweise manuell durch einen Operator, in den Transportkorb umgepackt.

Zur Ermöglichung der Konvektionsströmung ist ein Abstandshalter zwischen einem Boden der Reinigungseinrichtung und dem Transportkorb vorgesehen.

Eine bevorzugte Ausführungsvariante der Erfindung sieht vor, dass die Bauteile einer Charge an Bauteilen vor der Messung nach Schritt b2) in einen, vorzugsweise nichtmetallischen, Messbehälter umgepackt werden.

Es kann vorgesehen sein, dass die Bauteile einer Charge an Bauteilen zur Durchführung der Messung nach Schritt b2) in dem Messbehälter der Messeinrichtung zugeführt werden, wobei der Messbehälter vorzugsweise vollständig in die Messkabine eingeführt wird.

Die aus dem Reinigungsprozess ausgeführten Bauteile können in dem Messbehälter gelagert werden, in dem sie der Messung nach Schritt b2) unterzogen wurden, wobei der Messbehälter verschlossen wird, und der verschlossene Messbehälter weiteren Verfahrensschritten oder einer Lagerung zugeführt wird.

Bevorzugt umfasst die Kontrollmessung zur Bestimmung einer unzureichenden Reinigungswirkung der Reinigungslösung einen pH-Test.

Eine Weiterbildung der Erfindung sieht vor, dass nach Anzeigen der unzureichenden Reinigungswirkung der Reinigungslösung diese neutralisiert wird, wobei Uran nach der Neutralisierung der Reinigungslösung in der neutralisierten Reinigungslösung als Salz vorliegt, entweder gelöst, insbesondere als ungesättigte Salzlösung, oder ungelöst, insbesondere als gesättigte Salzlösung.

Es kann vorgesehen sein, dass ungelöste Uransalze abfiltriert werden. Alternativ oder additiv kann vorgesehen sein, dass gelöste Uransalze durch Destillation gewonnen werden.

Eine besonders bevorzugte Ausführungsvariante der Erfindung sieht vor, dass die abfiltrierten Uransalze und/oder die durch Destillation gewonnenen Uransalze thermisch, beispielsweise zwischen 50° C und 650°C, bevorzugt zwischen 100° C und 600°C, unter Luft zu Uranoxid umgesetzt werden.

Mit der Messeinrichtung und/oder zur Durchführung der Messung gemäß Schritt b2) und/oder zur Durchführung der ersten Messung kann beispielsweise folgendes Verfahren durchgeführt werden:
Die Messung erfolgt, abhängig vom Strahlenuntergrund sowie vom Kontaminationsgehalt der Bauteile, beispielsweise über einen Zeitraum von 5 Minuten bis 24 Stunden.

Das gesamte Messsignal setzt sich aus den aufsummierten Messsignalen der Gammadetektoren und der zentralen Messsonde zusammen. Gemessen wird die integrale Zählrate des gesamten Gammastrahlenenergiespektrums aller Gammadetektoren und der zentralen Messsonde (dies wird als Bruttozählrate verstanden). Von dieser Bruttozählrate wird ein, zuvor ermittelter, mittlerer Untergrund abgezogen, um die Nettozählrate zu erhalten. Dieser wird mit einem Kalibrierfaktor gewichtet, welcher das Verhältnis Becquerel / Zählimpuls in der vorhandenen Detektorgeometrie abbildet, und ebenfalls vorher ermittelt wurde.

Das gewichtete Nettosignal entspricht dann der Aktivität der Uranisotope ²³⁵U und ²³⁸U in der Charge an Bauteilen. Das stets mit vorhandene Isotop ²³⁴U kann rein rechnerisch aus dem Verhältnis ²³⁵U und ²³⁸U bestimmt werden.

Der gesamte Urangehalt auf den Bauteilen ergibt sich schließlich aus der Summe der drei Uranisotopenmassen.

Die Erfindung wird nachstehend auch hinsichtlich weiterer Merkmale und Vorteile anhand der Beschreibung eines Ausführungsbeispiels und unter Bezugnahme auf die beiliegenden Zeichnungen näher erläutert. Dabei zeigen
FIG 1 eine schematische Darstellung einer Messeinrichtung in einer Schnittdarstellung von oben und in einer weiteren Schnittdarstellung von der Seite;
FIG 2 eine schematische Darstellung eines mit einer Charge an Bauteilen beladenen Transportkorbs;
FIG 3 eine schematische Darstellung einer Reinigungseinrichtung mit einer Reinigungslösung und dem darin angeordneten Transportkorb nach FIG 2;
FIG 4 eine schematische Darstellung eines Deionatbads und dem darin angeordneten Transportkorb nach FIG 2;
FIG 5 eine schematische Darstellung einer Abtropfwanne und dem darin angeordneten Transportkorb nach FIG 2;
FIG 6 eine schematische Darstellung eines verschlossenen Messbehälters mit darin angeordneten Bauteilen.

Einander entsprechende Teile und Komponenten sind in den Figuren mit den gleichen Bezugszeichen bezeichnet.

In der Ausgangssituation liegen die mit Uranoxid kontaminierten Bauteile 5 in Transport- und/oder Lagerbehältern 4, wie beispielsweise Fässern für radioaktiven Abfall, vor, wobei je ein Transport- und/oder Lagerbehälter 4 eine Charge an Bauteilen 5 beinhaltet.

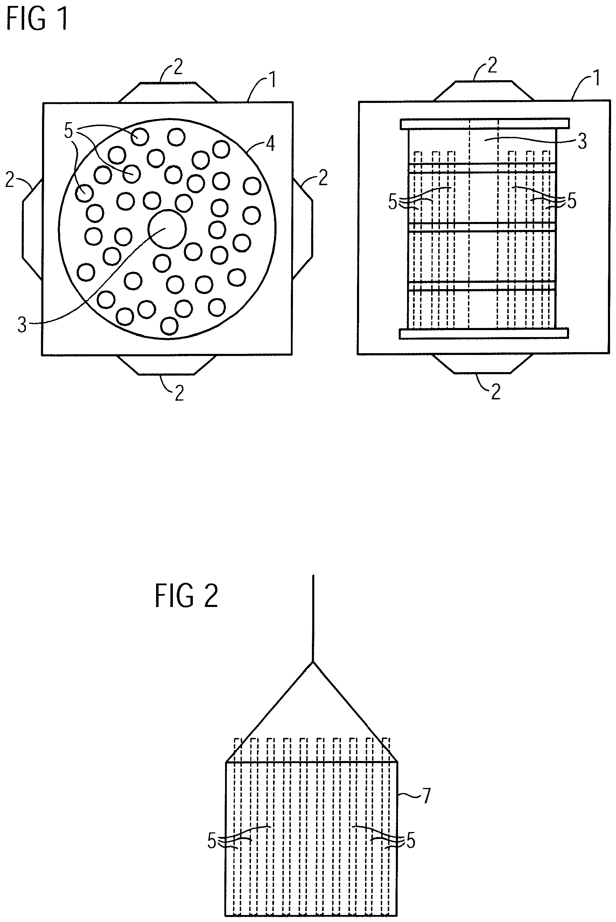

In einem ersten Schritt wird ein Transport- und/oder Lagerbehälter mit einer Charge der mit Uranoxid kontaminierten Bauteile 5 zur Durchführung einer ersten Messung vollständig in eine bereitgestellte Messeinrichtung 1, wie sie in FIG 1 dargestellt ist, eingebracht.

Die Messeinrichtung 1 umfasst eine Messkabine, wobei die Messkabine mehrere Gammadetektoren 2, im vorliegenden Fall sechs Gammadetektoren 2, und eine zentrale Messsonde 3 zur Messung des Urangehalts aufweist. Wie FIG 1 zeigt sind die Gammadetektoren 2 an den sechs Seitenwänden der Messkabine vorgesehen.

Die Zentralsonde 3 zur Durchführung der ersten Messung wird bevor der Transport- und/oder Lagerbehälter 4 in die Messeinrichtung eingebracht wird, mittig in den Transport- und/oder Lagerbehälter 4 eingeführt.

Die Messung erfolgt, abhängig vom Strahlenuntergrund sowie vom Kontaminationsgehalt der Bauteile über einen Zeitraum von 5 Minuten bis 24 Stunden.

Das gesamte Messsignal setzt sich aus den aufsummierten Messsignalen der Gammadetektoren 2 und der zentralen Messsonde 3 zusammen. Gemessen wird die integrale Zählrate des gesamten Gammastrahlenenergiespektrums aller Gammadetektoren 2 und der zentralen Messsonde 3 (dies wird als Bruttozählrate verstanden). Von dieser Bruttozählrate wird ein, zuvor ermittelter, mittlerer Untergrund abgezogen, um die Nettozählrate zu erhalten. Dieser wird mit einem Kalibrierfaktor gewichtet, welcher das Verhältnis Becquerel / Zählimpuls in der vorhandenen Detektorgeometrie abbildet, und ebenfalls vorher ermittelt wurde.

Das gewichtete Nettosignal entspricht dann der Aktivität der Uranisotope ²³⁵U und ²³⁸U in der Charge an Bauteilen 5. Das stets mit vorhandene Isotop ²³⁴U kann rein rechnerisch aus dem Verhältnis ²³⁵U und ²³⁸U bestimmt werden. Der gesamte Urangehalt auf den Bauteilen 5 ergibt sich schließlich aus der Summe der drei Uranisotopenmassen.

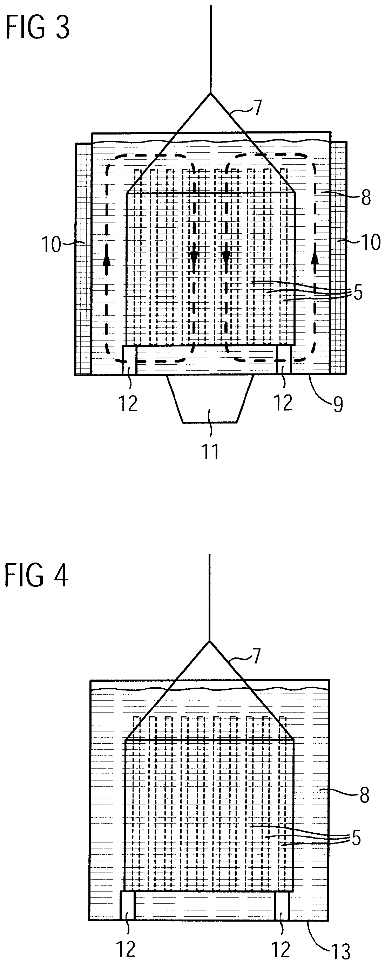

Für den Reinigungsprozess nach Schritt b1) wird in einem Schritt a) eine Reinigungseinrichtung 9, wie sie in FIG 3 dargestellt ist, mit einer Reinigungslösung 8 zur Lösung des Uranoxids der Bauteile 5 bereitgestellt. Das Uranoxid liegt an den Oberflächen der Bauteile 5 vor. Die Reinigungseinrichtung 9 ist ein Säurebad und die Reinigungslösung 8 umfasst eine Säure. Bei der Säure handelt es sich um Salpetersäure mit einer Konzentration zwischen 2% und 60%.

Die Charge der mit Uranoxid kontaminierten Bauteile 5 wird nun manuell von einem Operator 6 aus dem Transport- und/oder Lagerbehälter 4 in einen Transportkorb 7 aus Edelstahl, wie er in FIG 2 dargestellt ist, umgepackt.

Anschließend wird zur Durchführung des Reinigungsprozesses nach Schritt b1) die Charge der Bauteile 5 in dem Transportkorb 7 mittels eines Krans in das Säurebad 9 eingebracht.

Die Reinigungslösung 8 wird während des Reinigungsprozesses durch eine Heizung 10 auf Temperaturen zwischen 30° C und 100° C beheizt und durch von einem Ultraschallgenerator 11 erzeugten Ultraschall angeregt.

Die Reinigungslösung 8 ist während des Reinigungsprozesses nach Schritt b1) einer Konvektionsströmung ausgesetzt, so dass die Reinigungslösung 8 die Bauteile 5 der Charge an Bauteilen 5 umströmt und/oder durchströmt. Zur Ermöglichung der Konvektionsströmung bzw. des Umströmens und Durchströmens der Bauteile 5 ist ein Abstandshalter 12 zwischen einem Boden der Reinigungseinrichtung 9 und dem Transportkorb 7 vorgesehen.

Die Transportkorb 7 mit der Charge an Bauteilen 5 wird nach dem Reinigungsprozess nach Schritt b1) mittels eines Krans aus der Reinigungseinrichtung 9 ausgeführt, und einem Deionatbad 13, wie es in FIG 4 dargestellt ist, zugeführt um verbleibende Säure abzuwaschen. Die Bauteile 5 der Charge an Bauteilen 5 verbleiben dann für einen vorgesehenen Zeitraum von 5 Minuten bis 24 Stunden in dem Deionatbad 13. Wiederum ermöglichen Abstandshalter 12 zwischen dem Transportkorb 7 und dem Boden des Deionatbads 13 eine Konvektion der Flüssigkeit.

Die Bauteile 5 der Charge an Bauteilen 5 werden nach dem Deionatbad 13 aus dem Deionatbad 13 ausgeführt und in dem Transportkorb 7 mittels eines Krans einer Abtropfwanne 15 zugeführt. Die Bauteile 5 der Charge an Bauteilen 5 verbleiben dann zur Trocknung für einen vorgesehenen Zeitraum von 5 Minuten bis 24 Stunden in der Abtropfwanne 15.

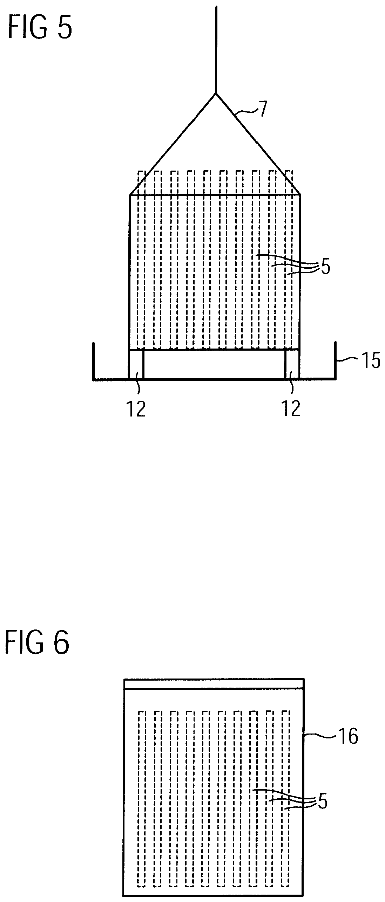

Nach der Trocknung und vor der Messung nach Schritt b2) werden die Bauteile 5 der Charge an Bauteilen 5 manuell aus dem Transportkorb 7 in einen nichtmetallischen Messbehälter 16, wie er in FIG 6 dargestellt ist, umgepackt.

Anschließend wird gemäß Schritt b2) eine Messung zur Bestimmung des Urangehalts der Bauteile 5 durchgeführt.

Die Bauteile 5 der Charge an Bauteilen 5 werden zur Durchführung der Messung nach Schritt b2) in dem Messbehälter 16 der Messeinrichtung 1 zugeführt.

Falls die Messung ergibt, dass ein Grenzwert für den Urangehalt überschritten wird, werden gemäß der Vorgabe von Schritt b2.1) die Schritte b1) und b2) wiederholt. Das heißt die Schritte b1) und b2) werden iterativ so lange wiederholt bis eine nötige Reinigungswirkung erreicht ist.

Falls die Messung ergibt, dass ein Grenzwert für den Urangehalt unterschritten wird, werden gemäß der Vorgabe von Schritt b2.2) die Bauteile 5 aus dem Prozess ausgeführt.

Die aus dem Reinigungsprozess ausgeführten Bauteile 5 werden in dem Messbehälter 16 gelagert, in dem sie der Messung nach Schritt b2) unterzogen wurden, wobei der Messbehälter 16 verschlossen wird, und der verschlossene Messbehälter 16 weiteren Verfahrensschritten oder einer Lagerung zugeführt wird.

Der Reinigungsschritt b) wird gemäß Vorgabe von Schritt c) mit mehreren, aufeinanderfolgenden Chargen an Bauteilen 5 durchgeführt bis eine Kontrollmessung eine unzureichende Reinigungswirkung der Reinigungslösung 8 anzeigt. Die Kontrollmessung zur Bestimmung der unzureichenden Reinigungswirkung der Reinigungslösung 8 umfasst einen pH-Test.

Gemäß Schritt d) wird nach Anzeigen der unzureichenden Reinigungswirkung das in der Reinigungslösung 8 gelöste Uranoxid zurückgewonnen.

Dazu wird die Salpetersäure umfassende Reinigungslösung neutralisiert, wobei Uran nach der Neutralisierung in der neutralisierten Reinigungslösung 8 als Salz vorliegt, entweder gelöst als ungesättigte Salzlösung, oder ungelöst als gesättigte Salzlösung.

Anschließend werden die ungelösten Uransalze abfiltriert und die gelösten Uransalze durch Destillation der Ausgangssalzlösung gewonnen.

Die abfiltrierten Uransalze und die durch Destillation gewonnen Uransalze werden schließlich thermisch zwischen 100° C und 600°C unter Luft zu Uranoxid umgesetzt und so zurückgewonnen.

### Bezugszeichen liste

- 1: Messeinrichtung
- 2: Gammadetektor
- 3: zentrale Messsonde
- 4: Transport- und/oder Lagerbehälter
- 5: Bauteil
- 7: Transportkorb
- 8: Reinigungslösung
- 9: Reinigungseinrichtung
- 10: Heizung
- 11: Ultraschallgenerator
- 12: Abstandshalter
- 13: Deionatbad
- 15: Abtropfwanne
- 16: Messbehälter

## Patentansprüche

1. Verfahren zur Rückgewinnung von Uran von mit Uranoxid kontaminierten Bauteilen (5) umfassend die Schritte:
a) Bereitstellen einer Reinigungseinrichtung (9) mit einer Reinigungslösung (8) zur Lösung des Uranoxids der Bauteile (5),
b1) Durchführung eines Reinigungsprozesses durch Einbringen einer Charge an Bauteilen (5) in die Reinigungseinrichtung (9),
b2) Durchführung einer Messung zur Bestimmung des Urangehalts der Bauteile (5),
b2.1) im Falle eines Überschreitens eines Grenzwertes für den Urangehalt: Wiederholung der Schritte b1) und b2),
b2.2) im Falle eines Unterschreitens eines Grenzwerts für den Urangehalt: Ausführung der Bauteile (5) aus dem Prozess,
c) Durchführung des Reinigungsschrittes b) mit mehreren, aufeinanderfolgenden Chargen an Bauteilen (5) bis eine Kontrollmessung eine unzureichende Reinigungswirkung der Reinigungslösung (8) anzeigt,
d) nach Anzeigen der unzureichenden Reinigungswirkung: Rückgewinnung des in der Reinigungslösung (8) gelösten Uranoxids,
wobei die Reinigungslösung (8) während des Reinigungsprozesses nach Schritt b1) einer Konvektionsströmung ausgesetzt wird, so dass die Reinigungslösung (8) die Bauteile (5) einer Charge an Bauteilen (5) umströmt und/oder durchströmt, wobei die Bauteile während des Reinigungsprozesses in einem Transportkorb (7) gelagert werden, und wobei zur Ermöglichung der Konvektionsströmung ein Abstandshalter (12) zwischen einem Boden der Reinigungseinrichtung (9) und dem Transportkorb (7) vorgesehen wird.

2. Verfahren nach Anspruch 1,
**dadurch gekennzeichnet, dass**
die Reinigungseinrichtung (9) ein Säurebad ist oder umfasst und dass die Reinigungslösung (8) eine Säure umfasst.

3. Verfahren nach Anspruch 1 oder 2,
**dadurch gekennzeichnet, dass**
zur Durchführung von Messungen des Urangehalts eine Messeinrichtung (1) bereitgestellt wird, wobei die Messeinrichtung (1) eine Messkabine umfasst, wobei die Messkabine einen oder mehrere Gammadetektoren (2) und/oder eine zentrale Messsonde (3) zur Messung des Urangehalts aufweist.

4. Verfahren nach Anspruch 3,
**dadurch gekennzeichnet, dass**
bevor eine Charge an Bauteilen (5) in die Reinigungseinrichtung (9) eingebracht wird, die Charge an Bauteilen (5) zur Durchführung einer ersten Messung des Urangehalts der Messeinrichtung (1) zugeführt wird.

5. Verfahren nach Anspruch 4,
**dadurch gekennzeichnet, dass**
die Bauteile (5) einer Charge an Bauteilen (5) während der ersten Messung in einem Transport- und/oder Lagerbehälter (4) gelagert sind.

6. Verfahren nach Anspruch 5,
**dadurch gekennzeichnet, dass**
die Zentralsonde (3) zur Durchführung der ersten Messung mittig in den Transport- und/oder Lagerbehälter (4) eingeführt wird.

7. Verfahren nach einem der vorhergehenden Ansprüche,
**dadurch gekennzeichnet,**
**dass** die Reinigungslösung (8) während des Reinigungsprozesses beheizt wird, und/oder
**dass** die Reinigungslösung (8) während des Reinigungsprozesses durch Ultraschall angeregt wird.

8. Verfahren nach einem der vorhergehenden Ansprüche,
**dadurch gekennzeichnet, dass**
die Bauteile (5) einer Charge an Bauteilen (5) nach dem Reinigungsprozess nach Schritt b1) aus der Reinigungseinrichtung (9) ausgeführt werden, und einem Deionatbad (13) zugeführt werden, wobei die Bauteile (5) einer Charge an Bauteilen (5) für einen vorgesehenen Zeitraum in dem Deionatbad (13) verbleiben.

9. Verfahren nach Anspruch 8,
**dadurch gekennzeichnet, dass**
die Bauteile (5) einer Charge an Bauteilen (5) nach dem Deionatbad (13) aus dem Deionatbad (13) ausgeführt und einer Abtropfwanne (15) zugeführt werden, wobei die Bauteile (5) einer Charge an Bauteilen (5) zur Trocknung für einen vorgesehenen Zeitraum in der Abtropfwanne (15) verbleiben.

10. Verfahren nach einem der Ansprüche 5 oder 6,
**dadurch gekennzeichnet, dass**
die Bauteile (5) einer Charge an Bauteilen (5) vor dem Einbringen in die Reinigungseinrichtung (9) von dem Transport- und/oder Lagerbehälter (4) in den Transportkorb (7) umgepackt werden.

11. Verfahren nach einem der vorhergehenden Ansprüche,
**dadurch gekennzeichnet, dass**
die Bauteile (5) einer Charge an Bauteilen (5) vor der Messung nach Schritt b2) in einen Messbehälter (16) umgepackt werden.

12. Verfahren nach Anspruch 3 und Anspruch 11,
**dadurch gekennzeichnet, dass**
die Bauteile (5) einer Charge an Bauteilen (5) zur Durchführung der Messung nach Schritt b2) in dem Messbehälter (16) der Messeinrichtung (1) zugeführt werden.

13. Verfahren nach Anspruch 11 oder 12,
**dadurch gekennzeichnet, dass**
die aus dem Reinigungsprozess ausgeführten Bauteile (5) in dem Messbehälter (16) gelagert werden, in dem sie der Messung nach Schritt b2) unterzogen wurden, wobei der Messbehälter (16) verschlossen wird, und der verschlossene Messbehälter (16) weiteren Verfahrensschritten oder einer Lagerung zugeführt wird.

14. Verfahren nach einem der vorhergehenden Ansprüche,
**dadurch gekennzeichnet, dass**
die Kontrollmessung zur Bestimmung einer unzureichenden Reinigungswirkung der Reinigungslösung (8) einen pH-Test umfasst.

15. Verfahren nach einem der vorhergehenden Ansprüche,
**dadurch gekennzeichnet, dass**
nach Anzeigen der unzureichenden Reinigungswirkung der Reinigungslösung (8) diese neutralisiert wird, wobei Uran nach der Neutralisierung der Reinigungslösung (8) in der neutralisierten Reinigungslösung (8) als Salz vorliegt, entweder gelöst oder ungelöst.

16. Verfahren nach Anspruch 15,
**dadurch gekennzeichnet,**
**dass** ungelöste Uransalze abfiltriert werden, und/oder
**dass** gelöste Uransalze durch Destillation gewonnen werden.

17. Verfahren nach Anspruch 15 und 16,
**dadurch gekennzeichnet, dass**
die abfiltrierten Uransalze und/oder die durch Destillation gewonnen Uransalze thermisch unter Luft zu Uranoxid umgesetzt werden.

## Claims

1. A method for recovering uranium from components (5) contaminated with uranium oxide, comprising the steps:
a) providing a cleaning device (9) with a cleaning solution (8) for dissolving the uranium oxide of the components (5),
b1) execution of a cleaning process by introducing a batch of components (5) into the cleaning device (9),
b2) execution of a measurement for determining the uranium content of the components (5),
b2.1) if a threshold value for the uranium content is exceeded: repetition of steps b1) and b2),
b2.2) if a threshold value for the uranium content is fallen short of: removal of the components (5) from the process,
c) execution of cleaning step b) with several successive batches of components (5) until a control measurement indicates an insufficient cleaning effect of the cleaning solution (8),
d) after indication of the insufficient cleaning effect: recovery of the uranium oxide dissolved in the cleaning solution (8),
wherein, during the cleaning process according to step b1), the cleaning solution (8) is exposed to a convection flow, so that the cleaning solution (8) flows around and/or through the components (5) of a batch of components (5), the components being stored in a transport basket (7) during the cleaning process and a spacer (12) being provided between a bottom of the cleaning device (9) and the transport basket (7) to enable the convection flow.

2. The method of claim 1,
**characterized in that**
the cleaning device (9) is, or comprises, an acid bath and **in that** the cleaning solution (8) comprises an acid.

3. The method of claim 1 or 2,
**characterized in that**
a measuring device (1) is provided for carrying out measurements of the uranium content, wherein the measuring device (1) comprises a measuring cabin, the measuring cabin including one or several gamma detectors (2) and/or a central measuring probe (3) for measuring the uranium content.

4. The method of claim 3,
**characterized in that**
a batch of components (5), before it is introduced into the cleaning device (9), is supplied to the measuring device (1) for executing a first measurement of the uranium content.

5. The method of claim 4,
**characterized in that**
the components (5) of a batch of components (5) are stored in a transport and/or storage container (4) during the first measurement.

6. The method of claim 5,
**characterized in that**
the central probe (3) for executing the first measurement is introduced centrally into the transport and/or storage container (4).

7. The method of any of the preceding claims,
**characterized in**
**that** the cleaning solution (8) is heated during the cleaning process, and/or **that** the cleaning solution (8) is excited through ultrasonic sound during the cleaning process.

8. The method of any of the preceding claims,
**characterized in that**
the components (5) of a batch of components (5) are passed out of the cleaning device (9) after the cleaning process according to step b1) and are supplied to a deionate bath (13), the components (5) of a batch of components (5) remaining in the deionate bath (13) for a predefined period of time.

9. The method of claim 8,
**characterized in that**
the components (5) of a batch of components (5) are passed out of the deionate bath (13) after the deionate bath (13) and are supplied to a drip pan (15), the components (5) of a batch of components (5) remaining in the drip pan (15) for a predefined period of time for drying.

10. The method of any of claims 5 or 6,
**characterized in that**
the components (5) of a batch of components (5), before being introduced into the cleaning device (9), are repacked from the transport and/or storage container (4) into the transport basket (7).

11. The method of any of the preceding claims,
**characterized in that**
the components (5) of a batch of components (5) are repacked into a measuring container (16) prior to the measurement according to step b2).

12. The method of claim 3 and claim 11,
**characterized in that**
the components (5) of a batch of components (5) are supplied to the measuring device (1) for executing the measurement according to step b2) in the measuring container (16).

13. The method of claim 11 or 12,
**characterized in that**
the components (5) passed out of the cleaning process are stored in the measuring container (16) in which they were subjected to the measurement according to step b2), the measuring container (16) being closed and the closed measuring container (16) being passed on to further process steps or to a storage.

14. The method of any of the preceding claims,
**characterized in that**
the control measurement for determining an insufficient cleaning effect of the cleaning solution (8) comprises a pH test.

15. The method of any of the preceding claims,
**characterized in that**
after indication of the insufficient cleaning effect of the cleaning solution (8), the latter is neutralized, wherein, after neutralization of the cleaning solution (8), uranium is present in the neutralized cleaning solution (8) as salt, either dissolved or undissolved.

16. The method of claim 15,
**characterized in**
**that** undissolved uranium salts are filtered off, and/or
**that** dissolved uranium salts are extracted by distillation.

17. The method of claim 15 and 16,
**characterized in that**
the filtered-off uranium salts and/or the uranium salts extracted by distillation are thermally transformed under air into uranium oxide.

## Revendications

1. Procédé de récupération d'uranium à partir de pièces (5) contaminées avec de l'oxyde d'uranium, comprenant les étapes suivantes :
a) mise à disposition d'un dispositif de nettoyage (9) avec une solution de nettoyage (8) pour la dissolution de l'oxyde d'uranium des pièces (5),
b1) réalisation d'un processus de nettoyage par l'introduction d'un lot de pièces (5) dans le dispositif de nettoyage (9),
b2) réalisation d'une mesure pour la détermination de la teneur en uranium des pièces (5),
b2.1) dans le cas d'un dépassement d'une valeur limite pour la teneur en uranium : répétition des étapes b1) et b2),
b2.2) dans le cas d'un passage en dessous d'une valeur limite pour la teneur en uranium : évacuation des pièces (5) hors du processus,
c) réalisation de l'étape de nettoyage (b) avec plusieurs lots successifs de pièces (5) jusqu'à ce qu'une mesure de contrôle montre une action de nettoyage insuffisante de la solution de nettoyage (8),
d) après l'affichage de l'action de nettoyage insuffisante : récupération de l'oxyde d'uranium dissous dans la solution de nettoyage,
dans lequel la solution de nettoyage (8) est exposée, pendant le processus de nettoyage selon l'étape b1), à un écoulement de convection, de façon à ce que la solution de nettoyage (8) entoure et/ou traverse les pièces (5) d'un lot de pièces (5), dans lequel les pièces sont stockés, pendant le processus de nettoyage, dans une corbeille de transport (7) et dans lequel, pour permettre l'écoulement de convection, une entretoise (12) est prévue entre un fond du dispositif de nettoyage (9) et la corbeille de transport (7).

2. Procédé selon la revendication 1,
**caractérisé en ce que**
le dispositif de nettoyage (9) est ou comprend un bain d'acide et **en ce que** la solution de nettoyage (8) comprend un acide.

3. Procédé selon la revendication 1 ou 2,
**caractérisé en ce que**
pour la réalisation des mesures de la teneur en uranium, un dispositif de mesure (1) est prévu, dans lequel le dispositif de mesure (1) comprend une cabine de mesure, dans lequel la cabine de mesure comprend un ou plusieurs détecteurs gamma (2) et/ou une sonde de mesure centrale (3) pour la mesure de la teneur en uranium.

4. Procédé selon la revendication 3,
**caractérisé en ce que**
avant qu'un lot de pièces (5) soit introduit dans le dispositif de nettoyage (9), le lot de pièces (5) est entré dans le dispositif de mesure (1) pour la réalisation d'une première mesure de la teneur en uranium.

5. Procédé selon la revendication 4,
**caractérisé en ce que**
les pièces (5) d'un lot de pièces (5) sont stockées, pendant la première mesure, dans un récipient de transport et/ou de stockage (4).

6. Procédé selon la revendication 5,
**caractérisé en ce que**,
pour la réalisation de la première mesure, la sonde centrale (3) est introduite au centre du récipient de transport et/ou de stockage (4).

7. Procédé selon l'une des revendications précédentes,
**caractérisé en ce que**
la solution de nettoyage (8) est chauffée pendant le processus de nettoyage et/ou
la solution de nettoyage (8) est excitée par des ultrasons pendant le processus de nettoyage.

8. Procédé selon l'une des revendications précédentes,
**caractérisé en ce que**
les pièces (5) d'un lot de pièces (5) sont évacuées, après le processus de nettoyage selon l'étape b1), hors du dispositif de nettoyage (9) et introduites dans un bain déionisé (13), dans lequel les pièces (5) d'un lot de pièces (5) restent pendant un laps de temps prévu dans le bain déionisé (13).

9. Procédé selon la revendication 8,
**caractérisé en ce que**
les pièces (5) d'un lot de pièces (5) sont évacués, après le bain déionisé (13), hors du bain déionisé (13) et sont introduits dans un bac d'égouttage (15), dans lequel les pièces (5) d'un lot de pièces (5) restent, pour le séchage, pendant un laps de temps prévu dans le bac d'égouttage (15).

10. Procédé selon l'une des revendications 5 ou 6,
**caractérisé en ce que**
les pièces (5) d'un lot de pièces (5) sont transférées, avant l'introduction dans le dispositif de nettoyage (9), du récipient de transport et/ou de stockage (4) vers la corbeille de transport (7).

11. Procédé selon l'une des revendications précédentes,
**caractérisé en ce que**
les pièces (5) d'un lot de pièces (5) sont transférées, avant la mesure selon l'étape b2), vers un récipient de mesure (16).

12. Procédé selon la revendication 3 et la revendication 11,
**caractérisé en ce que**
les pièces (5) d'un lot de pièces (5) sont entrées, pour la réalisation de ma mesure selon l'étape (b2) dans le récipient de mesure (16), dans le dispositif de mesure (1).

13. Procédé selon l'une des revendications 11 ou 12,
**caractérisé en ce que**
les pièces (5) évacuées hors du processus de nettoyage sont stockées dans le récipient de mesure (16), dans lequel elles ont été soumises à la mesure selon l'étape b2), dans lequel le récipient de mesure (16) est fermé et le récipient de mesure (16) fermé est soumis à d'autres étapes de procédé ou est stocké.

14. Procédé selon l'une des revendications précédentes,
**caractérisé en ce que**
la mesure de contrôle pour la détermination d'une action de nettoyage insuffisante de la solution de nettoyage (8) comprend un test de pH.

15. Procédé selon l'une des revendications précédentes,
**caractérisé en ce que**
après l'affichage de l'action de nettoyage insuffisante de la solution de nettoyage (8), celle-ci est neutralisée, dans lequel l'uranium, après la neutralisation de la solution de nettoyage (8), se présente, dans la solution de nettoyage (8) neutralisée, sous la forme d'un sel, soit dissous soit non dissous.

16. Procédé selon la revendication 15,
**caractérisé en ce que**
les sels d'uranium non dissous sont filtrés et/ou
les sels d'uranium dissous sont extraits par distillation.

17. Procédé selon la revendication 15 ou 16,
**caractérisé en ce que**
les sels d'uranium filtrés et/ou les sels d'uranium extraits par distillation sont transformés en oxyde d'uranium de manière thermique sous l'action de l'air.
